(19) Europäisches Patentamt

European Patent Office

Office européen des brevets

(11) **EP 1 087 216 A2**

(12) **EUROPÄISCHE PATENTANMELDUNG**

(43) Veröffentlichungstag:
   **28.03.2001 Patentblatt 2001/13**

(51) Int. Cl.⁷: **G01J 3/50**

(21) Anmeldenummer: **00119009.9**

(22) Anmeldetag: **01.09.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **24.09.1999 DE 19945963**

(71) Anmelder:
   **Patent-Treuhand-Gesellschaft für elektrische Glühlampen mbH**
   **81543 München (DE)**

(72) Erfinder:
* **Binder, Ulrich**
   **80803 München (DE)**
* **Wagner, Norbert**
   **80469 München (DE)**
* **Halbritter, Werner**
   **81735 München (DE)**
* **Jordan, Werner, Dr.**
   **80639 München (DE)**

(54) **Verfahren und Vorrichtung zur farbgetreuen Darstellung farbmetrisch vermessener Lichtverteilungen**

(57) Das erfindungsgemäße Verfahren sieht zum einen vor sowohl die Farben des Wiedergabemediums (1) als auch die der wiederzugebenden Lichtverteilung auf eine gemeinsame Basis, z.B. die CIE-x-y- oder CIE-UCS- Farbtafel oder ein anderes Farbsystem, zu beziehen. Zum anderen wird die Farbumstellung des Auges geeignet berücksichtigt, so daß ein visuell wahrgenommenes Unbunt der wiederzugebenden Lichtverteilung auch durch das Wiedergabemedium (1) unbunt dargestellt wird. Dazu werden die mit Hilfe eines Meßwertaufnehmers (3) gemessenen Werte der Lichtverteilung einer Lichtquelle (3) geeignet transformiert und diese transformierten Werte über das Wiedergabemedium (1) dargestellt.

**FIG. 1**

EP 1 087 216 A2

## Beschreibung

### Technisches Gebiet

Die Erfindung betrifft ein Verfahren und eine Vorrichtung zur farbgetreuen Darstellung farbmetrisch vermessener Lichtverteilungen.

In der Lichttechnik stellt sich für die Qualifizierung von Lampen neben der quantitativen Bestimmung des Lichtstroms und der Lichtstärkeverteilung unter anderem auch die Frage nach der Farbart der Lampe.

Bei der visuellen Qualitätsbeurteilung von Lampen spielt die Farbumstimmung des menschlichen Auges, das Helligkeit und Farbe zu einem Gesamteindruck zusammenfaßt, eine wesentliche Rolle. So fällt beim Einsatz nur einer einzigen Lampe als Lichtquelle eine Abweichung vom ihrem Soll-Farbort im allgemeinen nicht auf, da sich das Auge relativ rasch auf das (alleinige) Licht der Lampe adaptiert. In Anwesenheit mehrerer gleichartiger Lampen wird ein Unterschied zwischen deren Farbarten dagegen sofort wahrgenommen. Je nach Kombination der zu vergleichenden Lampen kann ein und dieselbe Lampe unbunt oder aber auch farbig erscheinen. Das Auge bezieht nämlich seine Weißreferenz aus dem Gesamteindruck aller Lichtquellen innerhalb seines Blickfeldes. Je höher die Intensität einer Lichtfarbe ist, desto stärker ist deren Einfluß auf die resultierende Weißreferenz. Ebenso tendiert das Auge zu höheren Farbtemperaturen. Lichtfarben höherer Farbtemperatur werden im Vergleich eher als Weiß empfunden. Diese Umstände machen eine rein subjektive visuelle Beurteilung sehr schwierig und können mitunter zu konträren Ergebnissen führen. Daher muß eine visuelle Vergleichsbeurteilung immer von einer objektiven farbmetrischen Messung begleitet werden.

### Stand der Technik

Zur Darstellung der Farbe sind unterschiedliche Systeme bekannt. Allen gemeinsam ist aber, das drei voneinander unabhängige Größen zur Kennzeichnung einer Farbe erforderlich sind. Für Körperfarben sind die Helmholtz-Maßzahlen, die als Beurteilungskriterien die anschaulichen Begriffe Helligkeit (hell - dunkel), Farbton (blau - grün - rot) und Sättigung (blaß - gesättigt) verwenden und für Lichtquellenfarben das CIE x-y-Farbsystem, bei dem die Farben durch die Koordinaten x, y und die Helligkeit definiert werden, gebräuchlich. Diese sogenannte Normfarbtafel (Farbdreieck) ermöglicht die quantitative Kennzeichnung der Farbart von Lichtquellen und Körperfarben. Alle realen Farben werden durch den Spektralfarbenzug und die Purpurgerade umgrenzt. Jede Farbe kann somit durch einen bestimmten Wert für die Normfarbanteile x,y (Farbort) und ein Helligkeitsmaß beschrieben werden. Im mittleren Bereich, genau bei x = 0,333 und y = 0,333, liegt Unbunt, d.h. je nach Helligkeit Weiß, Grau bis Schwarz.

Darüber hinaus spielen noch andere Farbsysteme eine Rolle, beispielsweise die CIE-UCS-Farbtafel von 1976. Die verschiedenen Farbsysteme können durch entsprechende Transformationen in einander überführt werden. Für weitere Details hierzu wird auf die einschlägige Literatur verwiesen, beispielsweise auf Coaten und Marsden (Ed.), „Lamps and Lighting", Arnold Verlag, 4. Auflage, 1997, insbesondere auf Kapitel 3, "Colour", von M. B. Halstead, oder auf Manfred Richter, „Einführung in die Farbmetrik", 2. Auflage, de Gruyter, ISBN 3-11-008209-8.

Zwar ist die farbmetrische Messung des Farborts von Lichtquellen ein objektives Verfahren, um eine von mehreren Eigenschaften von Lichtquellen zu charakterisieren. Allerdings läßt sich aus dem Farbort nur bedingt auf die subjektiv wahrgenommene Farbe einer Lichtquelle schließen.

An dieser Stelle sei noch angemerkt, daß kein Wiedergabemedium in der Lage ist, alle sichtbaren Farben zu erzeugen und den gesamten Farbumfang der Normfarbtafel darzustellen. Sowohl der Farbumfang (Gamut) eines Monitors (additive Farbmischung aus Rot, Grün und Blau) als auch der Farbumfang eines Drucks (subtraktive Farbmischung, CMYK = Cyan, Magenta, Yellow, Black) überdecken nur einen Teilbereich der Normfarbtafel. In jüngster Zeit entwickelte Laser-Displays überdecken einen weitaus größeren Bereich der Normfarbtafel, aber auch damit ist es nicht möglich alle sichtbaren Farben zu erzeugen. Innerhalb des Gamut eines Wiedergabemediums kann allerdings sehr wohl eine genaue Darstellung der Farbarten mit Hilfe einer Kalibriermessung erzeugt werden.

### Darstellung der Erfindung

Es ist Aufgabe der vorliegenden Erfindung, den Nachteil des Standes der Technik zu vermeiden und ein Verfahren zur farbgetreuen Darstellung farbmetrisch vermessener Lichtverteilungen unter Berücksichtigung der Farbumstellung des Auges bereitzustellen.

Diese Aufgabe wird durch die Merkmale des Anspruchs 1 gelöst. Besonders vorteilhafte Ausgestaltungen finden sich in den abhängigen Ansprüchen.

Die erfindungsgemäße Vorrichtung zur Durchführung des Verfahrens ist Gegenstand des Vorrichtungsanspruchs. Weitere bevorzugte Merkmale der Vorrichtung finden sich in den davon abhängigen Ansprüchen.

Ein spezieller Aspekt der Erfindung ist die möglichst farbgetreue Reproduzierung des visuellen Farbeindrucks einer gemessenen Lichtverteilung an einem PC-Monitor.

Für das erfindungsgemäße Verfahren ist es übrigens nachrangig, ob die Meßwerte der wiederzugebenden Lichtverteilung, d.h. die ortsaufgelösten Meßwerte für Farbort und Helligkeit, bereits vorliegen oder zuvor in einem zusätzlichen an sich bekannten Verfahrensschritt ermittelt werden müssen. Entscheidend sind vielmehr die folgenden Überlegungen.

Die Einstellung der Farben an einem Wiedergabemedium, z.B. an einem PC-Monitor, erfolgt durch Ausgabewerte, im Beispiel durch RGB-Werte, wobei hier RGB für die drei Grundfarben Rot, Grün bzw. Blau steht (additive Farbmischung). Wenn für jede mit Hilfe des Wiedergabemediums darstellbare Farbe der entsprechende Farbort bekannt ist, kann umgekehrt jedem Farbort (innerhalb des Gamut des Wiedergabemediums) der korrespondierende Ausgabewerte zugeordnet und dargestellt werden.

Aufgrund der Farbumstimmung des Auges ist aber in der Regel der visuelle Eindruck einer Farbe eines Wiedergabemediums deutlich verschieden von der korrespondierenden Farbe einer Lichtverteilung mit demselben Farbort.

Das erfindungsgemäße Verfahren sieht daher zum einen vor, sowohl die Farben des Wiedergabemediums als auch die der wiederzugebenden Lichtverteilung auf eine gemeinsame Basis, z.B. die CIE-x-y- oder CIE-UCS- Farbtafel oder ein anderes Farbsystem, zu beziehen. Zum anderen wird die Farbumstellung des Auges geeignet berücksichtigt, so daß ein visuell wahrgenommenes Unbunt der wiederzugehenden Lichtverteilung auch durch das Wiedergabemedium unhunt dargestellt wird.

Zu diesem Zweck werden in einem ersten Schritt, der Kalibrierung des Wiedergabemediums, sämtliche durch das Wiedergabemedium darstellbaren Farborte vermessen (Farbkoordinaten $x_i$, $y_i$) und in das erwähnte gemeinsame Farbsystem transformiert. Danach liegt für jeden Ausgabewert i des Wiedergabemediums ein eindeutiger Farbort (Farbkoordinaten $x_i'$, $y_i'$) in diesem gemeinsamen Farbsystem vor und umgekehrt. In einem zweiten Schritt, dem eigentlichen Betrrieb, werden in gleicher Weise die ortsaufgelösten Meßwerte (gemessene ortsabhängige Farbkoordinaten $X(\vec{r}), Y(\vec{r})$) der wiederzugebenden Lichtverteilung transformiert (transformierte ortsabhängige Farbkoordinaten $X(\vec{r}), Y(\vec{r})$). Als Transformationsursprung wird jeweils die zugehörige Weißreferenz mit dem Farbort $x_w$, $y_w$ gewählt, auf die sich das Auge aufgrund der Farbumstimmung bezieht, d.h. derjenige Farbort, der aufgrund der Farbumstimmung jeweils unbunt erscheint. Im ersten Schritt ist dies insbesondere der Weißpunkt des Wiedergabemediums, im zweiten Schritt muß der Transformationsursprung für eine farbrichtige Darstellung der Lichtstärkeverteilung zunächst ermittelt werden. Für weitere Details hierzu wird auf die entsprechenden Erläuterungen des Ausführungsbeispiels verwiesen.

Zum gegenwärtigen Stand der Erkenntnis wird die sogenannte Kries-Transformation (näheres hierzu findet sich in der bereits zitierten Schrift von Manfred Richter, „Einführung in die Farbmetrik", 2. Auflage, de Gruyter, ISBN 3-11-008209-8) als geeignet angesehen. Damit ergeben sich beispielsweise aus den gemessenen Farbkoordinaten x, y die transformierten Farbkoordinaten x', y' anhand folgender Transformations-Gleichung:

$$c_d = \frac{y_W}{-0,561\,x_W+1,258\,y_W+0,101}, \quad c_t = \frac{y_W}{-x_W-y_W+1}$$

$$x' = \frac{(1,2196\,c_d-0,2196\,c_t)x+(2,9543-2,7347\,c_d-0,2196\,c_t)y-(0,2196(c_d-c_t))}{(1,2196(c_d-c_t))x+(3,9543-2,7347\,c_d-1,2196\,c_t)y+(1,2196\,c_t-0,2196\,c_d)}$$

$$y' = \frac{y}{(1,2196(c_d-c_t))x+(3,9543-2,7347\,c_d-1,2196\,c_t)y+(1,2196\,c_t-0,2196\,c_d)}$$

Hier ist formal auch der Fall inbegriffen, daß die Weißreferenz $x_w$, $y_w$ des Wiedergabemediums mit dem definitionsgemäßen Unbunt-Punkt ( x = y = 1/3 ) der Normfarbtafel übereinstimmt, d.h. faktisch keine Transformation erforderlich ist bzw. stattfindet.

Bei geringen diesbezüglichen Abweichungen kommt statt der Kriestransformation auch eine einfache vektorielle Verschiebungen in Betracht.

Monitore sind standardmäßig auf eine ähnlichste Farbtemperatur von etwa $T_n$=6500K eingestellt. Der Weißpunkt $x_w$, $y_w$ (R = G = B=255) von PC-Monitoren, welche die CIE-Farbspezifikationen direkt unterstützen, ist standardmäßig für x=0,3127, y=0,3291 bei Einstellung der Leuchtdichte auf 80 cd/m$^2$ definiert. Solche Monitore haben ein integriertes Farbmeßgerät und können zusammen mit der Grafikkarte entsprechend kalibriert werden.

Der tatsächliche Weißpunkt $x_w$, $y_w$ an standardmäßigen handelsüblichen PC-Monitoren hängt von der individuellen Monitoreinstellung (Helligkeit, Kontrast und „ColorMode") in Verbindung mit der eingesetzten Grafikkarte ab. Stellt man die Farbe des Monitors so ein, daß ein Farbmeßgerät den CIEXYZ-Unbuntpunkt E ( x = y = 1/3 ) angibt, nimmt man hierbei visuell ein deutliches Rosa wahr.

Stellt man wie oben beschrieben zunächst anhand der gemessenen Farbkoordinaten $x_i$, $y_i$ (nicht transfor-

miert) ein Farbdreieck am Monitor dar, handelt es sich letztendlich um ein Farbdreieck mit den reellen Primärvalenzen $R_M, G_M, B_M$ des Monitors. Damit es als Farbdreieck des Normvalenzsystems interpretierbar ist, wird es - wie bereits prinzipiell beschrieben - in geeigneter Weise transformiert, und zwar derart, daß der Weißpunkt $x_w$, $y_w$ dann im definitionsgemäßen Unbuntpunkt $x = y = \frac{1}{3}$ liegt.

Der Farbort einer Halogenglühlampe mit einer Farbtemperatur von Tn=3000K liegt bei x = 0.437, y = 0.404. Aufgrund der Farbumstimmung des Auges erscheint eine Halogenlampe (einzige Lichtquelle im Raum) als unbunt. Das Auge ermittelt seine Weißreferenz aus dem Gesamteindruck aller Lichtquellen in seinem Blickfeld. Ist die Farbart innerhalb einer Ausleuchtung nicht homogen, werden Abweichungen von dieser Weißreferenz als farbig wahrgenommen.

Um eine derartige Lichtverteilung am Monitor farbrichtig darzustellen, also so, wie sie visuell infolge der Farbumstimmung wahrgenommen wird, werden die farbmetrischen Meßwerte unter Berücksichtigung der Weißreferenz des Auges transformiert. Die RGB-Ausgabewerte für die Monitordarstellung werden schließlich aus dem ins Normvalenzsystem transformierten Farbdreieck entnommen.

Dadurch ergibt sich die Möglichkeit, Lichtverteilungen unabhängig von einem Laboraufbau beurteilen zu können. Die aus der zu bewertenden Lichtverteilung gewonnenen Meßdaten können nämlich mittels moderner Datenübertragung binnen kürzester Zeit übermittelt und mit Hilfe des zuvor erläuterten erfindungsgemäßen Verfahrens an einem geeigneten PC-Monitor farbgetreu dargestellt werden.

Selbstverständlich ist der Kalibriervorgang für das Wiedergabesystems dann überflüssig, wenn bereits entsprechende Kalibrierdaten vorliegen. Insofern schließt das Schutzbegehren auch eine Variante des zuvor erläuterten erfindungsgemäßen Verfahrens ein, die das Vorhandensein entsprechender Kalibrierdaten voraussetzt, d.h. bei der keine Kalibrierung vorgesehen ist.

Außerdem richtet sich die Erfindung auf eine für die Durchführung solcher Verfahrensschritte geeignete Vorrichtung.

## Beschreibung der Zeichnungen

Im Folgenden soll die Erfindung anhand eines Ausführungsbeispiels näher erläutert werden. Es zeigen:

Figur 1     eine schematische Darstellung des Meßaufbaus für den Kalibriervorgang,

Figur 2     eine schematische Darstellung des Meßaufbaus für die Vermessung der Beleuchtungsstärkeverteilung.

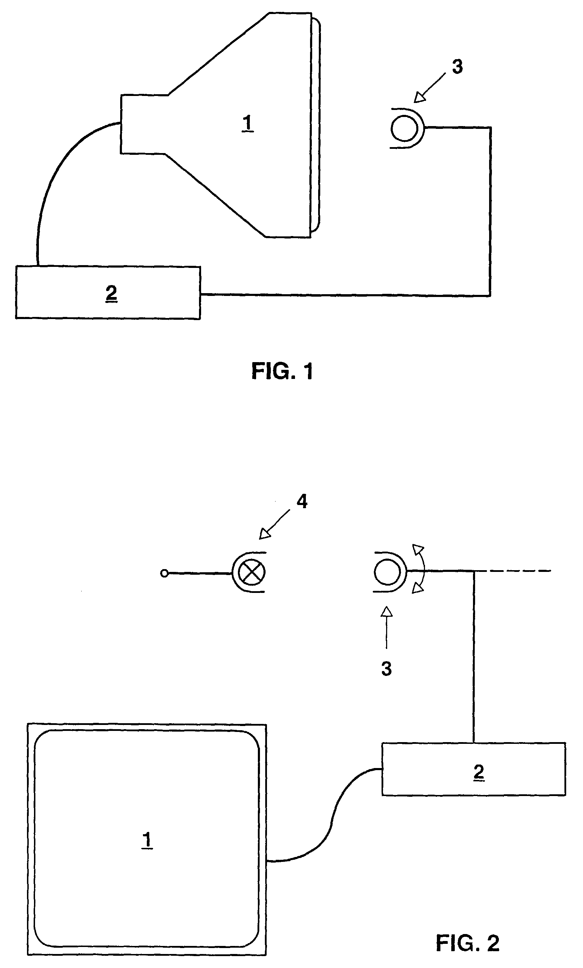

Das Ausführungsbeispiel (Figuren 1 und 2) betrifft die farbgetreue Darstellung der Beleuchtungsstärkeverteilung einer mit einer IRC(Infrared Coating)-Halogenglühlampe mit Kaltlichtreflektor beleuchteten weißen Wand an einem PC-Monitor (EIZO T562). Zu diesem Zweck sind vorteilhafterweise Teile des Verfahrens, beispielsweise Meßwertaufnahme und Meßwertverarbeitung (insbesondere Transformation), Speicherung der Kalibrierdaten (transformierte Farbort-Meßwerte und zugehörige Ausgabewerte), auf einem PC implementiert.

Figur 1 zeigt zunächst eine schematische Darstellung des Meßaufbaus für die Kalibrierung des PC-Monitors 1. Die Farbdarstellung am PC-Monitor 1 erfolgt additiv über die von der Grafikkarte des PC 2 erzeugten RGB-Ausgabewerte (Rot-Grün-Blau). Für die Kalibrierung wird zunächst die Beziehung zwischen den mittels RGB-Ausgabewerten am Monitor 1 darstellbaren Farben und den daraus resultierenden Farborten ermittelt. Zu diesem Zweck werden mittels eines Meßprogramms alle Vollfarben am Monitor 2 flächenfüllend dargestellt und der jeweils resultierende Farbort mit Hilfe eines Dreibereichs-Farbmeßgerätes 3 (LMT C3300) automatisch erfaßt. Der BeBegriff „Vollfarbe" ist hier so definiert, daß mindestens ein RGB-Ausgabewert den Maximalwert von 255 hat. Bei 24 Bit Farbauflösung (in der PC-Technik auch als „TrueColor" bezeichnet) kann Rot, Grün und Blau in jeweils 8 Bit = 256 Stufen dargestellt werden. Daraus ergeben sich $256^3$ verschiedene RGB- Ausgabewerte. Alle Kombinationen von RGB-Ausgabewerten, in denen keine der drei Komponenten R, G oder B den maximalen Wert 255 annimmt, ergeben lediglich verschwärzlichte Farben. Die Helligkeit und der Kontrast des verwendeten Monitors 1 entspricht im übrigen der üblichen Einstellung für die tägliche Arbeit am Monitor.

Insgesamt werden so für $3 \cdot 256^2 - 2 = 196606$ verschiedene RGB-Ausgabewerte $(RGB)_i$ die Farborte $x_i$, $y_i$ erfaßt:

| Farben | R | G | B |
|---|---|---|---|
| Rot-gelb-weiß-magenta | 255 | 0...255 | 0...255 |
| Grün-cyan-weiß-gelb | 0...255 | 255 | 0...255 |

(fortgesetzt)

| Farben | R | G | B |
|---|---|---|---|
| Blau-magenta-weiß-cyan | 0...255 | 0...255 | 255 |

Anschließend werden die Meßwerte $x_i$, $y_i$ mit Hilfe der Kries-Transformation in die Werte $x_i'$, $y_i'$ transformiert. Als Transformationsursprung dient der Weißpunkt des PC-Monitors 1. Damit steht im Speicher des PC 2 ein kompletter Kalibrierdatensatz entsprechend des Normvalenzsystems für spätere farbgetreue Darstellungen einer gemessen Lichtverteilung zur Verfügung. Der Kalibriervorgang muß deshalb im Grunde genommen nur einmalig für das verwendete Meßwertaufnahme- und Wiedergabesystem durchgeführt werden, zumindest solange sich die Eigenschaften der Systemkomponenten nicht ändern. Der Kalibrierdatensatz weist jedem RGB-Ausgabewerte $(RGB)_i$ eineindeutig einen auf das Normvalenzsystem bezogenen Farbort $x_i'$, $y_i'$ innerhalb des Gamut des PC-Monitors 1 zu.

Figur 2 zeigt eine schematische Darstellung des Meßaufbaus für den eigentlichen Meß- bzw. Wiedergabebetrieb. Gleichartige Merkmale wie in der Figur 1 sind hier mit gleichen Bezugszeichen versehen. Zunächst wird die Lichtverteilung einer IRC-Relektorlampe 4 in an sich bekannter Weise mit Hilfe eines Goniophotometers in mehreren B-Ebenen (DIN 5032-1) gemessen. Die Meßwerte werden anschließend in ein gleichförmiges Raster in einer Ebene senkrecht zur optischen Achse umgerechnet (Bildwandebene). Dieser Teil des Verfahrens ist obsolet, falls bereits ein Datensatz der Meßwerte der Lichtverteilung vorliegt.

Um nun am PC-Monitor 1 den visuellen Farbeindruck der Lichtverteilung farbrichtig darzustellen, wird zunächst der Transformationsursprung für die anschließende Kries-Transformation ermittelt. Als Transformationsursprung wird derjenige Farbort auf einer mit der IRC-Relektorlampe 4 bestrahlten weißen Wand gewählt, der aufgrund der Farbumstimmung des Auges visuell unbunt erscheint. Als sehr gute Näherung hat sich hierfür der über die Beleuchtungsstärke gemittelte Farbort $\bar{x}$, $\bar{y}$ erwiesen:

$$\bar{x} = \frac{\sum_{k=1}^{n}(x_k \cdot E_k)}{\sum_{k=1}^{n} E_k}, \qquad \bar{y} = \frac{\sum_{k=1}^{n}(y_k \cdot E_k)}{\sum_{k=1}^{n} E_k}$$

wobei $x_k$, $y_k$ und $E_k$ die Farbortanteile bzw. die Beleuchtungsstärke in der Bildwandebene bezeichnen. Der Index $k$ bezeichnet hier den k-ten Meßwert des Meßwert-Tripels $(x_k, y_k, E_k)$ der insgesamt n ortsabhängigen Meßwerte-Tripel.

Auf diese Weise stimmt bei Niedervolt-Halogenglühlampen mit einer Farbtemperatur von $T_n$=3000K der Farbeindruck am Monitor gut mit dem Farbeindruck beim direkten Betrachten der entsprechenden Lichtverteil ung überein. Bei deutlich geringeren Farbtemperaturen (z.B. niederwattige Hochvolt-Glühlampen) muß der Transformationsursprung nachkorrigiert werden. Dies liegt daran, daß bei geringen Farbtemperaturen keine vollständige Umstimmung stattfindet und der gemittelte Farbort $\bar{x}$,$\bar{y}$ somit auch nicht die exakte Weißreferenz darstellt.

Mit Hilfe der so ermittelten Koordinaten $\bar{x}$,$\bar{y}$ des Transformationsursprungs werden die einzelnen Farbort-Meßergebnisse anschließend kriestransformiert gemäß der eingangs erwähnten Transformationsgleichung. Die für die Darstellung der transformierten Farbkoordinaten am Monitor 1 notwendigen RGB-Ausgabewerte werden aus dem Kalibrierdatensatz bezogen. Zur Darstellung der Beleuchtungsstärkeverteilung wird schließlich noch die Helligkeit für jeden Bildpunkt berücksichtigt. Da die RGB-Ausgabewerte des Kalibrierdatensatzes Vollfarben erzeugen, werden die zur Darstellung notwendigen RGB-Ausgabewerte intensitätsabhängig und Gamma-korrigiert berechnet:

$$\begin{bmatrix} R^* \\ G^* \\ B^* \end{bmatrix} = \begin{bmatrix} R \\ G \\ B \end{bmatrix} \cdot \left( k \cdot \frac{E_i}{E_{\max}} + 1 - k \right)^{\frac{1}{\gamma}} \quad ,$$

wobei $E_i$ die Beleuchtungsstärke einer korrespondierenden Position in der Bildwandebene 5, $E_{max}$ die maximale Beleuchtungsstärke in der Bildwandebene 5, $\gamma$ den Gamma-Wert des Monitors 1 und $k$ einen zusätzlichen vom verwendeten Monitor abhängiger Korrekturfaktor bedeuten. Der Gamma-Wert charakterisiert die Reaktion eines Phosphors auf die Spannung an der Kathode einer Bildröhre und liegt - je nach Hersteller und Modell - im Bereich zwischen ca.

2,3 und 2,6.

Die Farbwiedergabe ist streng genommen nur auf dem kalibrierten System Monitor/Grafikkarte in exakt der gleichen Einstellung wie bei der Kalibriermessung farbgetreu. Inwieweit die Farbwiedergabe auf anderen Systemen vergleichbare Resultate bringt, hängt grundsätzlich von der spektralen Zusammensetzung der drei Grundfarben R,G,B (verwendete Leuchtstoffe) und von den individuellen Monitor- und Grafikkarten-Eigenschaften und - Einstellungen ab. Bei vergleichbaren Systemen (Monitore desselben Herstellers wie der kalibrierte, die Helligkeits- und Kontrasteinstellung des Monitors mit Hilfe von Monitor-Testprogrammen vergleichbar eingestellt) konnte bislang keine besonders auffallende Verfälschung der Farbwiedergabe beobachtet werden. Hingegen waren bei Billigmonitoren deutliche Farbverfälschungen zu erkennen, die insbesondere auf ungleiche γ-Werte der drei Farbkanäle zurückzuführen waren.

Obwohl die Erfindung detailliert am Beispiel eines PC-Monitors erläutert wurde, ist die Erfindung als soweit verallgemeinert zu verstehen, daß auch andere Wiedegabemedien, beispielsweise optische Projektionseinrichtungen, LCD-Anzeigesysteme, Drucker und andere mit eingeschlossen sind.

Während die Farbwiedergabe bei Monitoren additiv erfolgt (Lichtfarben), erfolgt sie auf Druckern subtraktiv (Körperfarben). Hier werden die Farben durch Mischen von CMYK erzeugt. Prinzipbedingt unterscheidet sich daher die Farbwiedergabe von Druckern mehr oder weniger deutlich von der Farbwiedergabe am Monitor. Die Qualität und die Ähnlichkeit der Farben im Ausdruck hängen wesentlich vom Druckermodell, dem verwendeten Papiermaterial und - wie bei allen Körperfarben - von der beleuchtenden Lichtquelle ab. Inwieweit ein bestimmtes Druckermodell in der Lage ist, eine am Monitor dargestellte Lichtverteilung bezüglich Farben und Kontrast vergleichbar wiederzugeben, muß im Einzelfall geprüft werden.

In den jüngsten Betriebssystemen von Computern findet zunehmend das sogenannte „Color Management" Einzug. Unter Color Management versteht man die Abstimmung aller Eingabe- und Ausgabegeräte mit dem Ziel, unabhängig von allen eingesetzten Geräten die gewünschte Farbwiedergabe zu erzielen. Jeder Monitor, Drucker und Scanner hat sein eigenes Farbsystem. Um das gesteckte Ziel zu erreichen, muß für jedes Gerät ein sogenanntes Farbprofil festgehalten und mittels einer Farbtransformation in den CIE-LUV- oder auch CIE-L*a*b*-Farbraum transformiert werden. Somit werden alle geräteabhängigen Farbdaten in geräteunabhängige farbmetrische Werte (und auch umgekehrt) transformiert.

Durch das Color Management eröffnet sich in der Zukunft die Möglichkeit, farbmetrisch vermessene Lichtverteilungen mit Hilfe des erfindungsgemäßen Verfahrens an jedem beliebigen Monitor, für den auch ein entsprechendes Farbprofil vorhanden ist, farbgetreu darstellen zu können.

Als konkrete Einsatzfälle seien hier die farbgetreue Darstellung von Farborttoleranzen bei Kaltlichtreflektoren und des Farbeindrucks von Autoscheinwerfern mit Entladungslampen erwähnt.

Im ersten Fall kommt es, bedingt durch Toleranzen im Herstellprozeß von Reflektor-Kaltlichtverspiegelungen zu Modifikationen der spektralen Zusammensetzung des reflektierten Lichts. Bezogen auf ein und dieselbe Lampe resultiert daraus ein veränderter Farbort des reflektierten Lichts. Ebenso gibt es auch grundsätzliche herstellerspezifische Unterschiede infolge des spezifischen Schichtdesigns der Verspiegelung. Im Vergleich zum Farbort einer aluminiumverspiegelten Reflektorkalotte, dem sogenannten "Alubezugspunkt", wird für eine Lampe mit einer bestimmten Farbtemperatur die maximal zulässige Verschiebung des Farbortes durch Vorgabe entsprechender Toleranzfelder definiert.

Um den Einfluß der Farbort-Toleranzen bezüglich wahrnehmbarer Farbunterschiede anschaulich darstellen zu können, wird in Abhängigkeit vom Alubezugspunkt ein Toleranzfeld entsprechend farbig dargestellt. Der Alubezugspunkt wird hierbei als Unbuntpunkt definiert. Ein großer Vorteil dieser Vorgehensweise liegt in der Möglichkeit, den visuellen Farbeindruck einer bestimmten Farbortabweichung auch ohne entsprechend vorhandene Musterlampe visualisieren zu können.

Dem zweiten Fall liegt die Erkenntnis zugrunde, daß der Farbort von Entladungslampen über die Lebensdauer nicht völlig konstant ist. Mit zunehmender Brenndauer der Lampe wandert der Farbort in der Regel in Richtung höherer Farbtemperaturen. Werden bei Autoscheinwerfern unterschiedlich gealterte Lampen verwendet, beispielsweise durch Ersatz einer Lampe nach einem Unfallschaden, können die Farborte der beiden Lampen je nach Brenndauer soweit voneinander abweichen, daß ein unterschiedlicher Farbeindruck entsteht.

Zur Visualisierung der Farbunterschiede können mit Hilfe des erfindungsgemäßen Verfahrens und durch Vorgabe zweier Farborte sowie eines Unbuntbezugspunktes die unterschiedlichen Farben am Monitor farbgetreu dargestellt werden.

Aufgrund der im Vergleich zu Scheinwerfern sehr geringen Leuchtdichte und des vergleichsweise geringen maximalen Helligkeitskontrastes von Monitoren kann der reale Eindruck, wie z.B. die Blendung, nicht dargestellt werden. Andererseits wird der unterschiedliche Farbeindruck nur dann deutlich wahrgenommen, wenn man nicht geblendet wird, also nicht direkt in den Lichtkegel blickt. Vielmehr wird der unterschiedliche Farbeindruck hauptsächlich durch das Streulicht hervorgerufen, also durch die Streuscheibe. Insofern kann das erfindungsgemäße Verfahren auch in diesem Fall einen visuell wahrnehmbaren Farbunterschied anschaulich vermitteln.

**Patentansprüche**

1. Verfahren zur farbgetreuen Darstellung farbmetrisch vermessener Lichtverteilungen mit den Messwerten $x_k$, $y_k$ mit Hilfe eines Wiedergabemediums mit folgenden Verfahrensschritten:

   a in einem optionalen Kalibriervorgang zur Kalibrierung des Wiedergabemediums:

   a.1 Darstellen einer Farbe an dem Wiedergabemedium durch Ansteuern des Wiedergabemediums mit einem Ausgabewert,
   a.2 Messen des Farbortes x, y dieser Farbe des Wiedergabemediums und Speichern des Meßwertes,
   a.3 Wiederholen der Schritte a.1 und a.2 bis innerhalb des Gamut des Wiedergabemediums zu jedem Ausgabewert i ein Farbort-Meßwertepaar $x_i$, $y_i$ abgespeichert ist,
   a.4 Transformieren der Meßwertepaare $x_i$, $y_i$ in ein Farbsystem, wobei der Transformationsursprung der Weißpunkt des Wiedergabemediums ist,
   a.5 Speichern der transformierten Wertepaare $x_i'$, $y_i'$ in einem Kalibrierdatensatz, in dem jedem Ausgabewert i ein transformiertes Wertepaare $x_i'$, $y_i'$ eineindeutig zugeordnet ist,

   b im Betrieb zur Darstellung:

   b.1 Transformieren der Meßwerte $x_k$, $y_k$ der wiederzugebenden Lichtverteilung in das für die Kalibrierung des Wiedergabemediums verwendete Farbsystem, wobei ein geeigneter Transformationsursprungs unter Berücksichtigung der Farbumstellung des Auges ausgewählt wird derart, daß ein visuell wahrgenommenes Unbunt der wiederzugebenden Lichtverteilung auch durch das Wiedergabemedium unbunt dargestellt wird, wodurch zu jedem Meßwertepaar $x_k$, $y_k$ der wiederzugebenden Lichtverteilung ein korrespondierendes transformiertes Meßwertepaar $x_k'$, $y_k'$ erzeugt wird,
   b.2 Auswählen eines korrespondierenden Ausgabewertes k zu jedem transformierten Meßwertepaar $x_k'$, $y_k'$ der wiederzugebenden Lichtverteilung aus dem Kalibrierdatensatz für das Wiedergabemedium, wobei in dem Kalibrierdatensatz jedem Ausgabewert k ein Wertepaare $x_k'$, $y_k'$ des für die Kalibrierung verwendeten Farbsystems eineindeutig zugeordnet ist,
   b.3 Darstellen der Lichtverteilung durch Ansteuern des Wiedergabemediums mit allen unter b.2 ermittelten Ausgabewerten.

2. Verfahren nach Anspruch 1, wobei die Meßwertepaare mit Hilfe einer Kries-Transformation transformiert werden.

3. Verfahren nach Anspruch 2, wobei die Farbort-Meßwertepaare x,y gemäß folgender Transformationsgleichungen in die Farbkoordinaten $x'$, $y'$ transformiert werden:

$$x' = \frac{(1{,}2196\,c_d\text{-}0{,}2196\,c_t)x+(2{,}9543\text{-}2{,}7347\,c_d\text{-}0{,}2196\,c_t)y\text{-}(0{,}2196(c_d\text{-}c_t))}{(1{,}2196(c_d\text{-}c_t))x+(3{,}9543\text{-}2{,}7347\,c_d\text{-}1{,}2196\,c_t)y+(1{,}2196\,c_t\text{-}0{,}2196\,c_d)}$$

$$y' = \frac{y}{(1{,}2196(c_d\text{-}c_t))x+(3{,}9543\text{-}2{,}7347\,c_d\text{-}1{,}2196\,c_t)y+(1{,}2196\,c_t\text{-}0{,}2196\,c_d)}$$

mit

$$c_d = \frac{y_W}{\text{-}0{,}561\,x_W+1{,}258\,y_W+0{,}101}, \qquad c_t = \frac{y_W}{\text{-}x_W\text{-}y_W+1}$$

und wobei $x_w$, $y_w$ die Koordinaten des Farborts der zugehörigen Weißreferenz bezeichnen, auf den sich das Auge aufgrund der Farbumstimmung jeweils bezieht.

4. Verfahren nach Anspruch 3, wobei das Wiedergabemedium ein Monitor und die Weißreferenz der Weißpunkt dieses Monitors ist.

5. Verfahren nach Anspruch 3 oder 4, wobei zumindest näherungsweise die Farbkoordinaten $\bar{x}, \bar{y}$ der Weißreferenz der wiederzugebenden Lichtverteilung aus ihren Meßwert-Tripeln $x_k$, $y_k$ und $E_k$ wie folgt berechnet werden:

$$\overline{x} = \frac{\sum_{k=1}^{n}(x_k \cdot E_k)}{\sum_{k=1}^{n} E_k}, \qquad \overline{y} = \frac{\sum_{k=1}^{n}(y_k \cdot E_k)}{\sum_{k=1}^{n} E_k}$$

und wobei $x_k$, $y_k$ und $E_k$ die ortsabhärtgigen Farbkoordinaten bzw. die Beleuchtungsstärke in der Meßebene der wiederzugebenden Lichtverteilung bezeichnen.

6. Verfahren nach einem der vorstehenden Ansprüche, wobei für die Messung ein X,Y,Z-Dreibereichs-Farbempfänger verwendet wird.

7. Verwendung des Verfahrens nach einem der vorstehenden Ansprüche zur Darstellung der Farbtoleranz von Lampen.

8. Verwendung des Verfahrens nach Anspruch 7, wobei es sich um Reflektorlampen mit dichroitischer Verspiegelung handelt.

9. Verwendung des Verfahrens nach einem der Ansprüche 1 bis 6 zur Darstellung der Farbtoleranz von Scheinwerfern.

10. Verwendung des Verfahrens nach Anspruch 9, wobei es sich um Scheinwerfern mit Entladungslampen für Kraftfahrzeuge handelt.

11. Vorrichtung zur farbgetreuen Darstellung farbmetrisch vermessener Lichtverteilungen mit

- einer Wiedergabevorrichtung (1) zur Darstellung der Lichtverteilungen,

- einer Ansteuervorrichtung, welche die Wiedergabevorrichtung (1) mit Ausgabewerten ansteuert,

- einer Speichervorrichtung zur Speicherung von Kalibrierdaten der Wiedergabevorrichtung (1) und der Farbort-Meßwerte der Lichtverteilung, wobei die Kalibrierdaten jedem Ausgabewert i ein Farbort-Wertepaare $x_i'$, $y_i'$ eines Farbsystems zuordnen,

- einer Auswertevorrichtung, die die Farbort-Meßwertepaare $x_k$, $y_k$ der Lichtverteilung in das Farbsystem der Kalibrierdaten transformiert und für jedes so transformierte Farbort-Meßwertepaar $x_k'$, $y_k'$ aus den Kalibrierdaten einen korrespondierenden Ausgabewerte k zur Ansteuerung der Wiedergabevorrichtung (1) ermittelt.

12. Vorrichtung nach Anspruch 11, wobei zusätzlich eine Meßvorrichtung (3) zur Messung des Farbortes vorgesehen ist.

13. Vorrichtung nach Anspruch 11 oder 12, wobei zusätzlich ein Steuerwerk vorgesehen ist, dem ein Steuerprogramm zugeordnet ist, welches das Verfahren nach einem der Ansprüche 1 bis 6 definiert.

14. Vorrichtung nach einem der Ansprüche 11 bis 13, wobei die Ansteuervorrichtung, die Speichervorrichtung, die Auswertevorrichtung und das Steuerwerk durch die Komponenten eines Rechnersystems (2), beispielsweise PC, realisiert sind.

**FIG. 1**

**FIG. 2**